# EUROPEAN PATENT SPECIFICATION

(11) **EP 4 516 460 B1**
(45) Date of publication and mention of the grant of the patent: **03.06.2026**
(21) Application number: 24197232.2
(22) Date of filing: 29.08.2024
(51) Int. Cl.: B25J 1/12, B25J 21/02

(54) **DEVICE FOR OVERTURNING A TRAY OF VIALS FOR A PHARMACEUTICAL ISOLATOR**
VORRICHTUNG ZUM UMDREHEN EINER SCHALE MIT FLÄSCHCHEN FÜR EINEN PHARMAZEUTISCHEN ISOLATOR
DISPOSITIF DE RENVERSEMENT D'UN PLATEAU DE FIOLES POUR UN ISOLATEUR PHARMACEUTIQUE

(30) Priority: 01.09.2023 IT 202300018006
(43) Date of publication of application: 05.03.2025
(73) Proprietor: Comecer S.p.A., 48014 Castel Bolognese (IT)
(72) Inventor: BRUNETTI, Alessandro, 48014 CASTEL BOLOGNESE (RA) (IT); COMENTALE, Mario, 48014 CASTEL BOLOGNESE (RA) (IT); GALASSI, Filippo, 48014 CASTEL BOLOGNESE (RA) (IT)
(74) Representative: Studio Torta S.p.A.

(56) References cited:
- US-A1- 2019 177 013
- US-A1- 2023 192 466

## Description

### TECHNICAL FIELD

This invention relates to a device for overturning a tray containing vials with the heads facing the bottom of the tray, inside a pharmaceutical isolator.

In particular, this invention finds advantageous but not exclusive application in using ready-to-use pre-sterilised trays in vial filling lines in aseptic environments, to which the description below explicitly refers without any loss of generality thereby.

### BACKGROUND

The use of "ready-to-use", also simply called RTU, pre-sterilised containers is continuously increasing in vial filling lines in aseptic environments for various reasons, for example due to the need to produce small batches, due to greater flexibility in production, and also due to the fact that RTU containers cost less and less.

A very widespread example of RTU containers are trays containing multiple vials with their respective heads facing the bottom of the tray. The trays comprise two lids, a first simply resting on an internal perimeter shoulder of the tray and a second glued to the upper perimeter edge. The trays with the two lids are then closed in a double bag.

The vials are intended to contain a drug, for example a liquid drug, and must be inserted in a filling machine that operates in an aseptic environment, i.e. in a grade A environment. The unbagging of the trays and the insertion of the vials in the aseptic environment of the filling machine is a crucial step of the liquid drug vial production process since sterility must be guaranteed.

A widespread approach to ensure and maintain the sterility of vials inserted in the filling machine is the so-called no-touch-transfer (NTT) approach, which involves the use of an isolator connected to the inlet of the filling machine and comprising at least three working chambers communicating in cascade and provided with respective glove flanges to enable an operator to handle the tray. In particular, in the first working chamber, the operator removes the outer bag and transfers the tray with the inner bag to the second working chamber. In the second working chamber, the operator removes the outer bag and transfers the completely unbagged tray to the third working chamber. In the third working chamber, the operator removes the two covers, overturns the tray to arrange the vials with their heads up, and removes the tray, freeing the vials.

In particular, the third working chamber comprises a first station, wherein the tray is temporarily locked to enable the removal of the two covers, a second station, wherein the operator overturns the tray with the help of a rotating shelf, and a third station, which comprises a storage plane on which the overturned tray is supported and in which the tray is removed, thus leaving the vials standing with their heads upwards. At this point, the operator transfers the vials from the storage plane to the filling machine using a spatula.

To enable the handling described above in the three stations of the third working chamber, the latter must have at least one glove flange for each of the three stations. Therefore, the third working chamber has a rather large footprint compared to a normal working chamber with two glove flanges. The greater the footprint, the greater the volume of the working chamber (the height is predetermined by other factors) and, thus, the greater the consumption of electricity to produce the necessary laminar air flow. In addition, a greater number of glove flanges increases the risk of contaminations and/or losses of the pharmaceutical isolator, because the glove flange is a critical element from this point of view, and increases the processing time, since the operator must pass from one glove flange to the other more times.

Tray overturning devices are known e.g. from US 2019/177013 A1 or US 2023/192466 A1.

### SUMMARY

The purpose of this invention is to provide a pharmaceutical isolator with a working chamber for removing covers and overturning the tray, which is free of the drawbacks described above and, at the same time, is easy and economical to produce.

In accordance with this invention, a tray overturning device and a pharmaceutical isolator are provided according to that set forth in the appended claims.

The claims describe preferred embodiments of this invention to be considered an integral part of this description.

### BRIEF DESCRIPTION OF THE DRAWINGS

This invention will now be described with reference to the attached drawings that illustrate a non-limiting embodiment thereof, in which:
- Figure 1 illustrates an exploded axonometric view of a tray containing multiple vials with their respective heads facing the bottom of the tray;
- Figure 2 schematically illustrates according to an axonometric view, a pharmaceutical isolator for handling the tray in Figure 1;
- Figures 3 and 4 illustrate, according to the same axonometric view, some components and devices inside the pharmaceutical isolator in Figure 1, including an overturning device of this invention for overturning the tray during two respective handling steps of the tray inside a working chamber of the pharmaceutical isolator;

- Figure 5 illustrates, with more detail, according to an axonometric view, a drive system of the overturning device in Figures 3 and 4 for locking the tray on a frame of the device before and while overturning the tray;
- Figures 6 and 7 illustrate the same front view of the overturning device in Figures 3 and 4 when the tray is received by the overturning device and, respectively, locked on the frame of the overturning device;
- Figure 8 illustrates, with more detail, according to a view from above, a locking system of the overturning device in Figures 3 and 4 for locking a lid above the tray;
- Figures 9 to 11 illustrate the components and devices in Figures 3 and 4 during three additional tray handling steps;
- Figure 12 illustrates a rear view of the overturning device in Figures 3 and 4 when the overturned tray is raised to free the vials;
- Figure 13 illustrates, according to an axonometric view, a detail of an additional embodiment of the overturning device of this invention.

### DESCRIPTION OF EMBODIMENTS

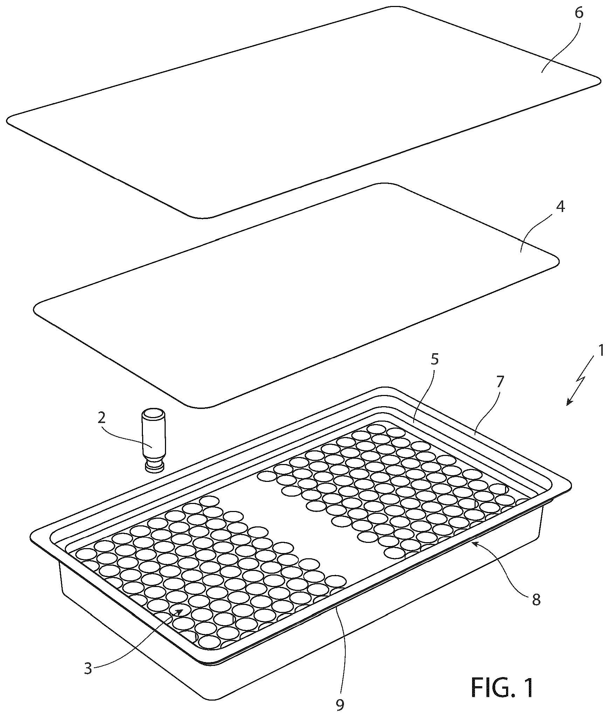

In Figure 1, reference number 1 generically indicates, as a whole, a tray containing vials with their respective heads facing the bottom of the tray. For simplicity, Figure 1 illustrates only one vial, indicated with 2. In particular, the tray 1 comprises multiple circular seats 3 open at the top to receive respective vials 2 with their heads down. The tray 1 is provided with a first cover 4, which simply rests on an internal perimeter shoulder 5 of the tray 1 in use, and a second cover 6, which is glued to the upper perimeter edge 7 in use. An external perimeter shoulder 8 corresponds to the internal perimeter shoulder 5.

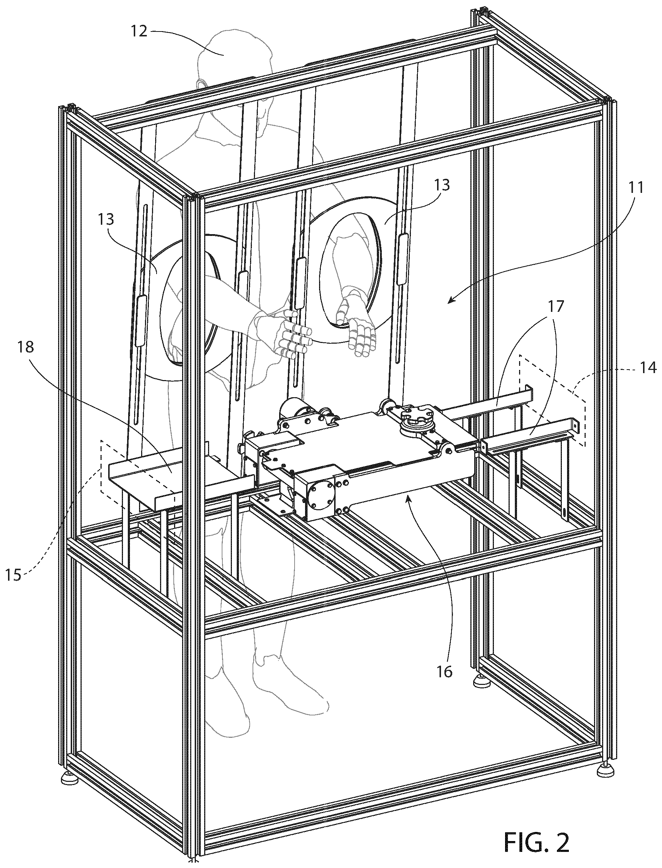

In Figure 2, reference number 10 generically indicates a pharmaceutical isolator, which, for greater clarity, is illustrated in a very simplified manner. The pharmaceutical isolator 1 comprises a working chamber 11 that an operator 12 can access through a pair of glove flanges 13, illustrated without the glove portion.

With reference to Figure 2, the working chamber 11 has an inlet opening 14 for inserting the tray 1 and an outlet opening 15 for extracting the vials 2 with the respective heads facing upwards. The pharmaceutical isolator 10 comprises an overturning device 16, which is arranged in the working chamber 11 between the inlet opening 14 and the outlet opening 15 and is manually driven by the operator 12 to overturn the tray 1. The working chamber 11 comprises a pair of connecting guides 17 arranged between the inlet opening 14 and the overturning device 16 and a connecting plane 18 arranged between the overturning device 16 and the outlet opening 15.

Normally, the tray 1 is provided closed in a double bag (not illustrated), i.e. comprising an inner bag that encloses the tray 1 and an outer bag that encloses the inner bag containing the tray 1. The pharmaceutical isolator 10 comprises two additional working chambers (not illustrated), which are connected in cascade upstream of the working chamber 11 to enable the operator 12 to remove the first bag in the first additional working chamber and the second bag in the second additional working chamber and then insert the unbagged tray in the working chamber 11 through the inlet opening 14.

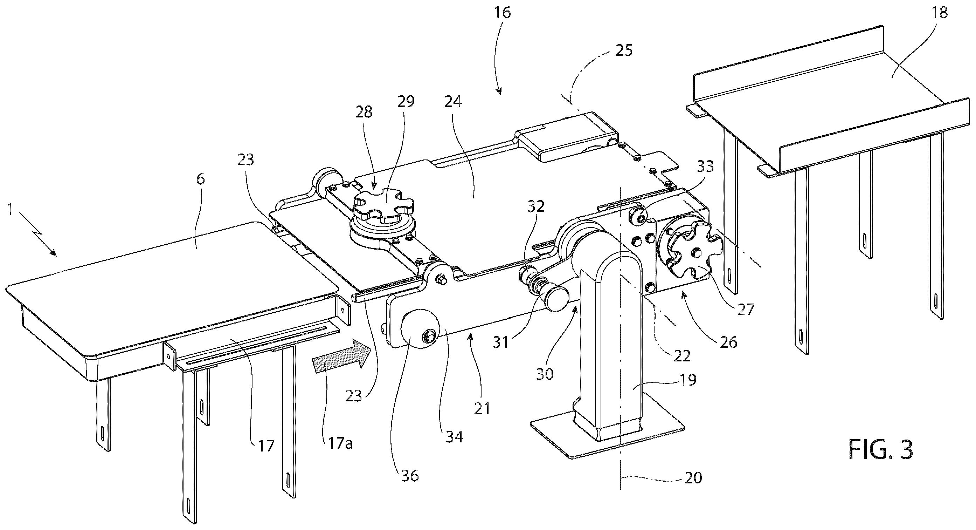

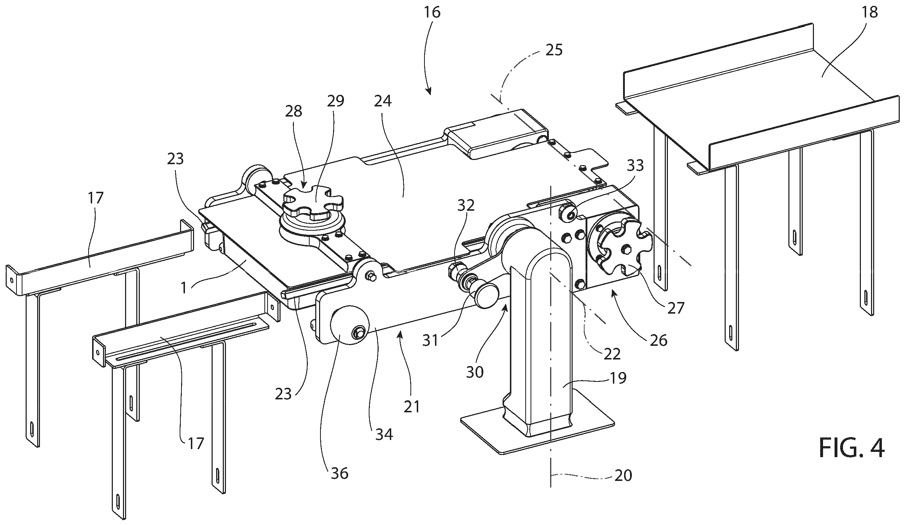

Figure 3 illustrates the overturning device 16, the pair of connecting guides 17, and the connecting plane 18, as they are arranged inside the working chamber 11, and the tray 1 closed by the cover 6 resting on the connecting guides 17 opposite the overturning device 16. The connecting guides 17 are spaced apart from each other so as to support the tray 1 at two longitudinal, side portions 9 (Figure 1) of the external perimeter shoulder 8. Figure 4 illustrates the tray 1 completely inserted in the overturning device 16.

With reference to Figures 3 and 4, the overturning device 16 comprises an upright 19, which has a longitudinal axis 20 and can be fixed to the floor (not illustrated) of the working chamber 11 so that the longitudinal axis 20 is vertical, a frame 21 hinged to the upright 19 to rotate around an axis 22 orthogonal to the upright 19, i.e. to the longitudinal axis 20, two parallel guides 23 mounted on the frame 21 orthogonal to a virtual plane on which the axis 22 lies to support the tray 1 along the above-mentioned two side portions of the external perimeter shoulder 8 of the tray 1, and a lid 24 mounted on the frame 21 to rotate around an axis 25 to and from a closed position, wherein the lid 24 is arranged parallel to the guides 23. In both Figures 3 and 4, the lid 24 is in the closed position. The axis 25 is parallel to the axis 22.

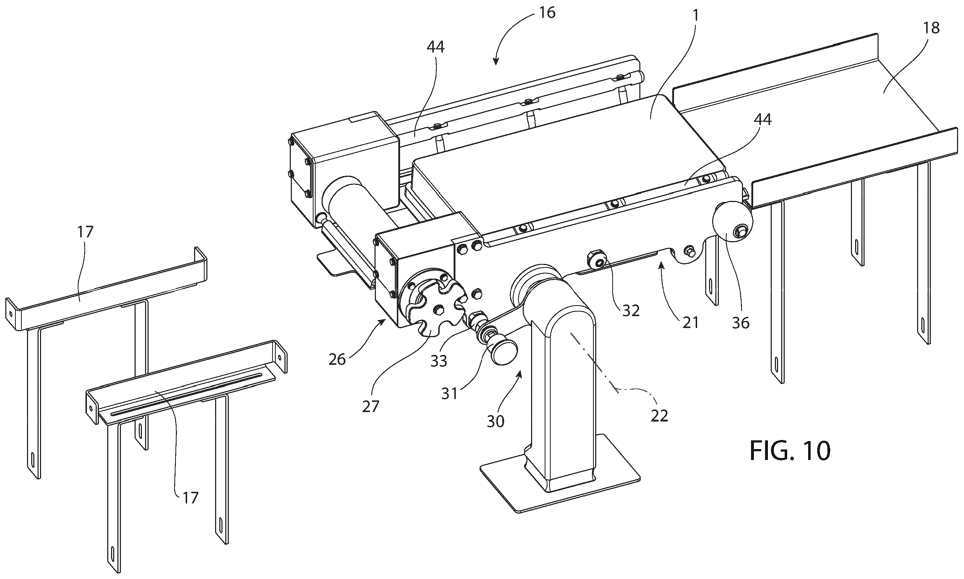

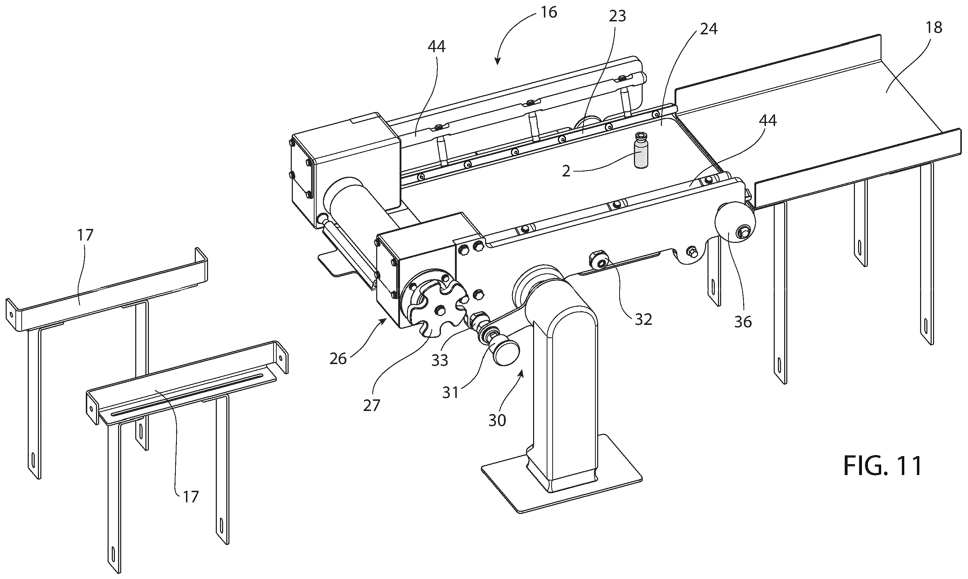

The frame 21 is designed to rotate around the axis 22 between a first position illustrated in Figures 3, 4, and 9, wherein the two guides 23 are arranged so as to receive the tray 1, and a second position, illustrated in Figures 10 and 11, wherein the guides 23 are arranged so as to overturn the tray 1 above the lid 24 in a closed position (Figure 10) so that the lid 24 acts as the support plane for the vials 2 falling from the tray 1 (Figure 11). To this end, the connecting guides 17 are arranged in the working chamber 11 so that each is longitudinally aligned with a respective guide 23 of the overturning device 16 when the frame 21 is in the first position and the connecting plane 18 is arranged in the working chamber 11 to be coplanar with the lid 24 of the overturning device 16 when the frame 21 is in the second position. In particular, the second position of the frame 21 is rotated by a flat angle compared to the first position of the frame 21.

The two guides 23 are movable transversely to their longitudinal extension and reciprocally between a receiving position, wherein the guides 23 are designed to receive the tray 1 by sliding the side portions 9 when the frame 21 is in the first position, and a locking position, wherein the guides 23 clamp the tray 1. Each connecting guide 17 is aligned with the respective guide 23 when the two guides 23 are in the receiving position.

With reference to Figures 3 and 4, the overturning device 16 comprises a drive system 26 to move the two guides 23 transversely and reciprocally between them. The drive system 26 operates manually and comprises a handwheel 27 that can be handled by the operator 12. The overturning device 16 comprises a locking system 28 to lock the lid 24 in the closed position. The locking system 28 is mounted on the lid 24. The locking system 28 also operates manually and comprises a handwheel 29 that can be handled by the operator 12.

With reference to Figures 3, 4 and 10, the overturning device 16 comprises a further locking system 30 to lock the frame 21 selectively in the first and second position. The locking system 30 comprises a spring pin 31, which is mounted so that it can move axially on the upright 19 to engage a first seat 32 or a second seat 33 formed in a side portion 34 of the frame 21. The engagement of the seat 32 defines the first position of the frame 21 (Figures 3 and 4) and the engagement of the seat 33 defines the second position of the frame 21 (Figure 10). The two seats 32 and 33 project from the side portion 24 according to an external, substantially truncated-cone shape.

More specifically, the spring pin 31 is movable parallel to the axis 22. The spring pin 31 comprises a spring (not illustrated) to maintain the engagement in the seat 32 or in the seat 33 and can be disengaged by manually pulling it against the action of the spring. The side portion 34 is mounted on an upper portion 35 of the upright 19 to rotate around the axis 22. The two seats 32 and 33 are in two diametrically opposite positions to the axis 22.

The frame 21 is provided with an idle knob 36 that can be grasped by the operator 12 and arranged at one end of the side portion 34 to facilitate the rotation of the frame 21 from the first to the second position and vice versa.

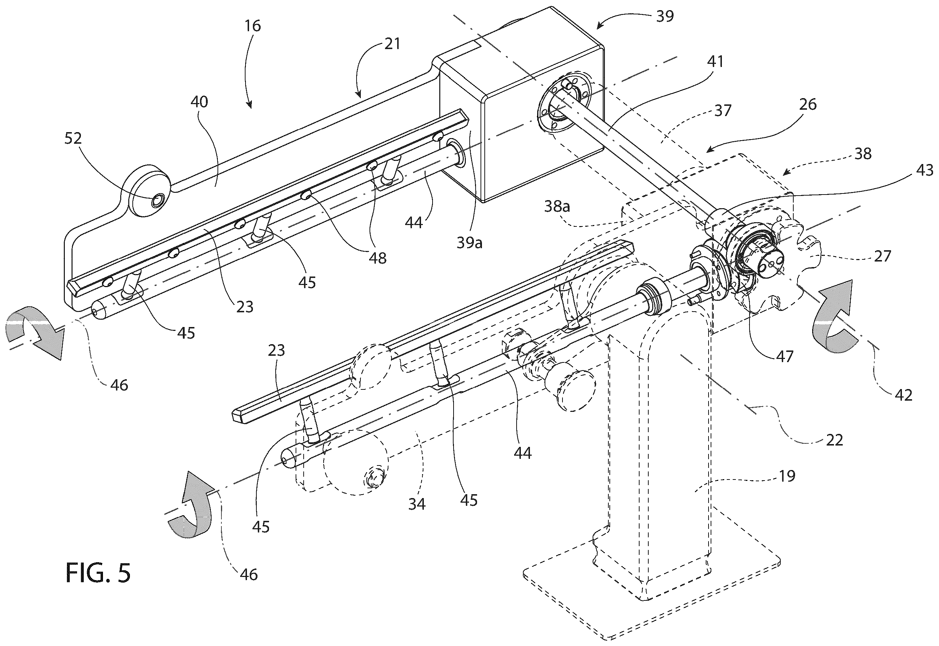

With reference to Figure 5, which illustrates the overturning device 16 without any parts and with dashed lines in other parts to illustrate the drive system 26 with greater clarity, the frame 21 is substantially U-shaped and comprises a hollow central portion 37 and two oblong side portions 34 and 40 rigidly connected to the central portion 37 via two, respective box-shaped bodies 38 and 39. The drive system 26 comprises a primary shaft 41, which is mounted on the frame 21 to rotate about an axis 42 parallel to the axis 22, and comprises two, opposite-direction involute screws 43 (only one is illustrated in Figure 5), and two secondary shafts 44, each of which is provided with at least one arm 45 radially projecting to rigidly support a respective guide 23, is mounted on the frame 21 to rotate about a respective axis 46 parallel to the guide 23, and comprises a gear wheel 47 (only one is illustrated in Figure 5) coupled to a respective one of the two involute screws 43.

The handwheel 27 is angularly integral with the primary shaft 41 and, in the example illustrated in the figures, is mounted at the box-shaped body 38. The primary shaft 41 extends inside the central portion 37. Each pair consisting of an involute screw 43 and the respective gear wheel 47 is housed in a respective box-shaped body 38, 39. Each secondary shaft 44 comes out of a respective box-shaped body 38, 39.

Each secondary shaft 44 comprises multiple arms 45 arranged along the secondary shaft 44 to increase the rigidity of support of the respective guide 23.

The rotation of the handwheel 27 entails a rotation of the primary shaft 41, the rotation of the secondary shafts 44 in opposite directions and, thus, moving the guides 23 closer together or further apart transversely to their longitudinal extension. In the example in Figure 5, one rotation clockwise of the handwheel 27 corresponds to the movement of the guides 23 towards the locking position.

Advantageously, each guide 23 comprises multiple rubber washers 48 distributed along the length of the guide 23 and facing, in use, the tray 1, to encourage the clamping of the tray 1 when the guides 23 are in the locking position.

When inserted in the overturning device 16, the tray 1 longitudinally abuts two side walls 38a and 39a of the two box-shaped bodies 38 and 39.

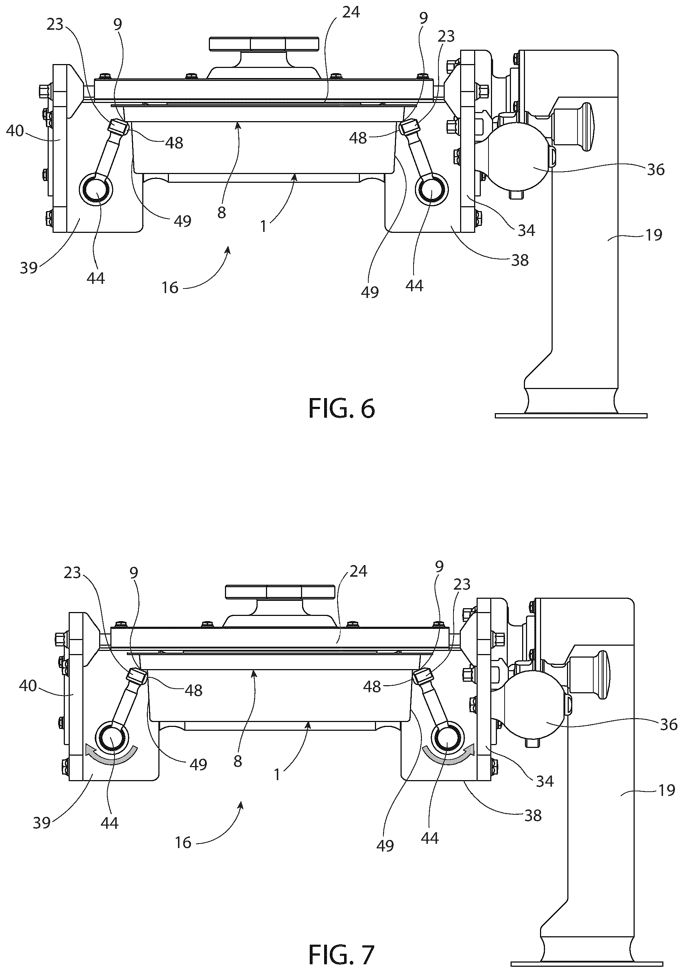

Figures 6 and 7 illustrate the overturning device 16 according to a front view, i.e. as is seen by the connecting guides 17 when the guides 23 are in the receiving position and, respectively, in the locking position. The guides 23 in the receiving position (Figure 6) make it possible to insert the tray 1 in the overturning device 16 by sliding the two side portions 9, which coincide with two longitudinal side edges of the external perimeter shoulder 8, along the guides 23. Thus, the guides 23 support the tray 1 at the two side edges 9. The guides 23 in the locking position (Figure 7) clamp the tray 1 pressing, with the rubber washers 48, along two side walls 49 of the tray below the side edges 9.

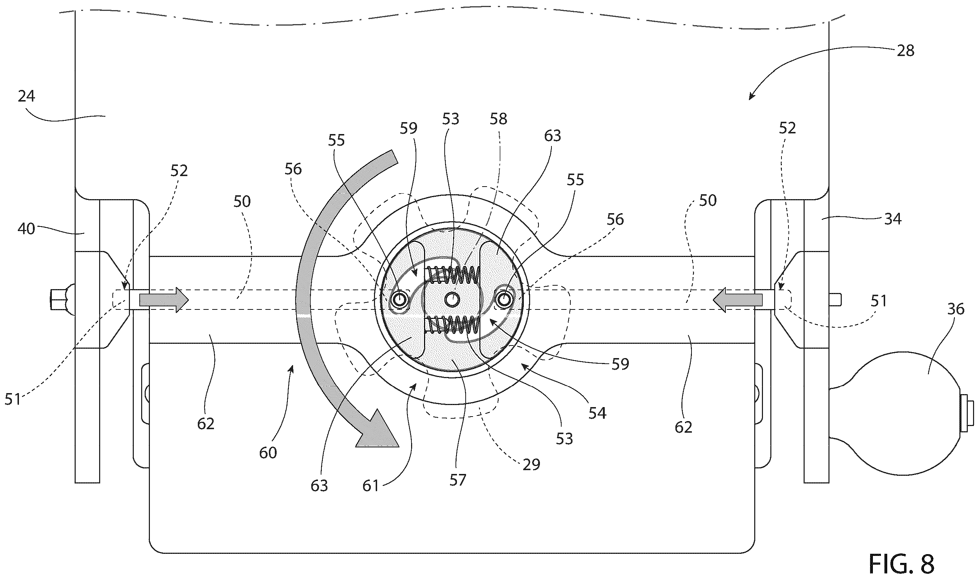

With reference to Figure 8, the locking system 28 comprises two rods 50, which are mounted axially aligned on the lid 24 to axially slide in the opposite direction so that respective first ends 51 of the two rods 50 engage two respective holes 52 arranged on the two, opposite side portions 34 and 40 of the frame 21, at least one elastic member 53, for example two helical springs, to maintain the two rods 50 axially separated so as to maintain the ends 51 engaged in the holes 52, and a cam mechanism 54 coupled to the two rods 50. The handwheel 29 is connected to the cam mechanism 54 and can be manually driven to rotate against the action of the elastic member 53 so as to disengage the ends 51 from the holes 52. One of the two holes 52, the one on the side portion 40, is clearly visible in Figure 5 as well.

In particular, the cam mechanism 54 comprises a pair of pins 55, each of which projects transversely and integrally from a second end 56 of a respective rod 50, and a body 57, which is mounted on the lid 24 to rotate around an axis 58 perpendicular to the lid 24 and to the axis of the rods 50 and has two curved slits 59 diametrically mirroring the axis 58 and engaged, each of them, by a respective pin 56. The curvature and arrangement of the slits 59 is such that two rotations in the opposite direction of the body 57 correspond to moving the pins 56 closer together and further apart along the axis of the rods 50. The handwheel 29 is angularly integral with the body 57.

More specifically, the locking system 28 comprises a casing 60, which is mounted on the lid 24 and comprises a central housing 61 and two side portions 62. Each rod 50 slides along a respective side portion 62. The rods 50 are provided with respective end elements 63 mounted on respective second ends 56. The end elements 63 are arranged in the central housing 61 with the elastic member 53 interposed so that the latter presses the end elements 63 to abut against internal walls of the central housing 61.

In the operating example illustrated in Figure 8, an anticlockwise rotation of the handwheel 29 entails a rotation with the same direction of the body 57 that brings the pins 55 together, against the action of the elastic member 53, and that, thus, disengages the ends 51 of the rods from the holes 52. Releasing the handwheel 29, the elastic member 53 reciprocally distances the end elements 63 and, thus, the pins 55 and, thus, the ends 51 return to engage the holes 52.

In use, the unbagged tray 1 is inserted in the working chamber 11 through the inlet opening 14 (Figure 2) and reaches the connecting guides 17 (Figure 3). The operator 12, after having fitted the glove flanges 13, can perform the following actions on the tray 1.

The overturning device 16 is initially with the frame 21 in the first position, the guides 32 in the receiving position, and the lid 24 is locked in the closed position. The operator 12 manually inserts the tray 1 in the overturning device 16 pushing the tray 1 according to a direction 17a parallel to the connecting guides 17 and, thus, to the guides 23 (Figure 3).

At this point, with the tray 1 placed on the guides 23 under the lid 24 (Figure 4), the operator 12 acts on the handwheel 26 of the drive system 26 to clamp the guides 23 around the tray 1 (Figures 5 and 7).

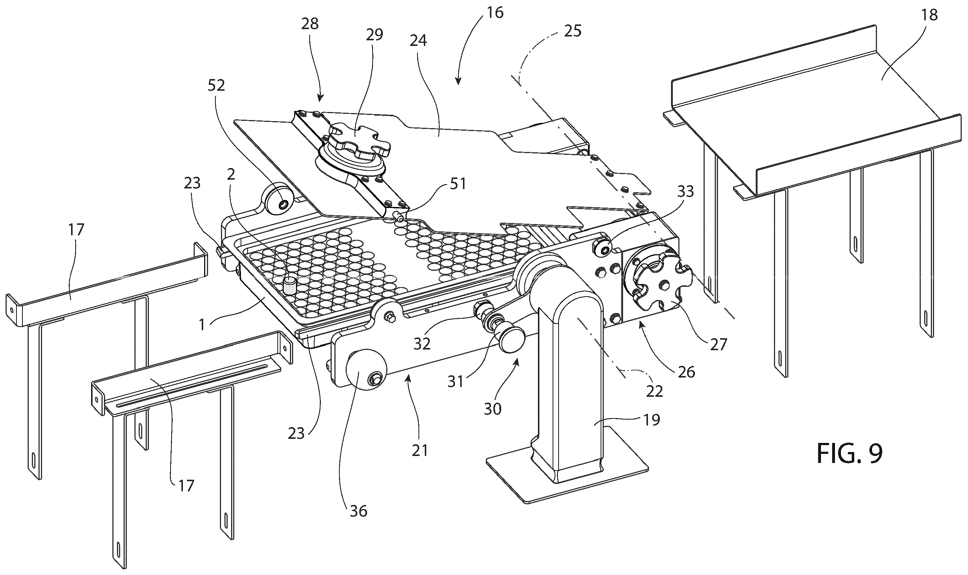

Subsequently, the operator 12 acts on the handwheel 29 of the locking system 28 to unlock the lid 24 (Figure 8) and raises the lid 24 to remove the covers 4 and 6 from the tray 1 (Figure 9). The tray 1 is held, clamped by the guides 23 while the operator removes the covers 4 and 6. This is advantageous when it is necessary to remove the cover 6 that is glued to the upper perimeter edge 7. Then the lid 24 is brought back and locked in the closed position.

Now the operator 12 can act on the locking system 30, pulling the spring pin 31 to disengage it from the seat 32 so as to unlock the frame 21, grasp the knob 36 to rotate the frame 21 into the second position. Thanks to the outer, truncated-cone shape of the seat 33, the spring pin 31 is automatically inserted in the seat 33 when the frame 21 reaches the second position, thus locking the frame 21 in the second position (Figure 10).

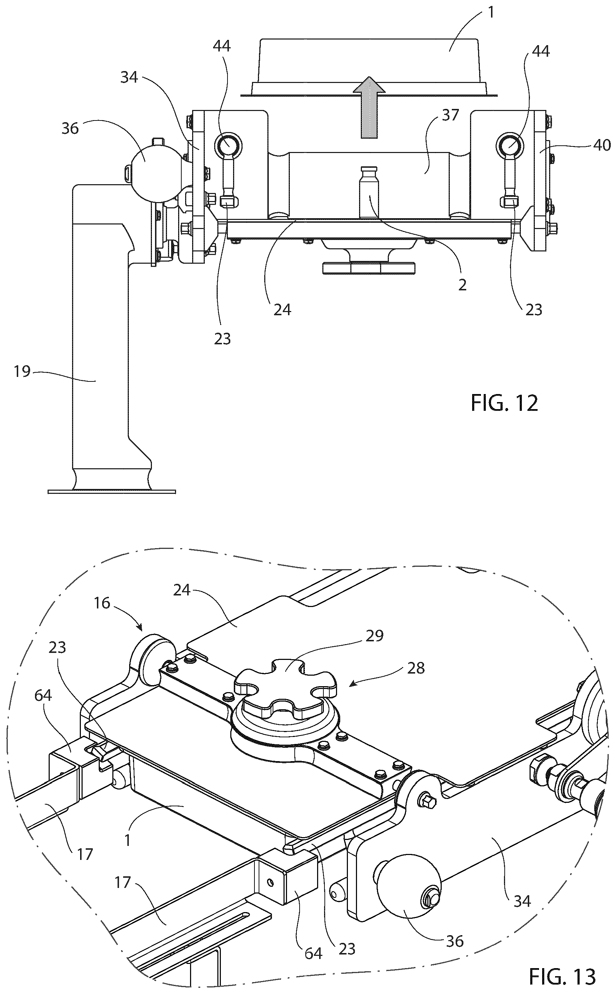

The operator 12 acts again on the handwheel 27 of the drive system 26 to bring the guides into a releasing position, wherein the guides 23 are transversely spaced apart so as to allow their removal for raising the tray 1 when the frame 21 is in the second position (Figures 11 and 12). With reference to Figure 11, which illustrates the overturning device 16 when the tray 1 has already been removed, when the frame 21 is in the second position, the lid 24 acts as a support plane for the vials 2 and is coplanar to the connecting plane 18. Figure 12 illustrates, with greater clarity, the releasing position of the guides 23 and the tray 1 while it is removed for raising.

As can be seen in comparing Figures 6, 7, and 12, the guides 23 move from the locking position to the releasing position, necessarily passing by the receiving position.

At this point, the operator 12 transfers the vials from the overturned lid 24 to the connecting plane 18, and from the latter to the outlet opening 15 using a spatula. At the end of the transfer of the vials 2, the operator 12 acts again on the locking system 30 and feed system 26 to return the frame 21 to the first position and the guides 23 to the receiving position.

According to an additional embodiment of this invention illustrated in Figure 13, wherein the corresponding elements are indicated with the same numbers and acronyms in Figure 3, the overturning device 16 comprises a pair of end-stroke elements 64, which can be mounted at the ends of the connecting guides 17 to define two end strokes for the guides 23 to define the receiving position of the guides 23. In this way, it is simpler for the operator 12 to identify the receiving position while the handwheel 27 rotates.

The main advantage of the overturning device 16 described above is to enable, via a single station in the working chamber 11 of the pharmaceutical isolator 10, the opening and overturning of the tray 1 and the transfer of the vials 2 towards the outlet opening 15, i.e. it makes it possible to remove the covers 4 and 6 of the tray 1, overturn the tray 1, and transfer the vials 2 to the outlet opening using a single pair of glove flanges 13, as is shown in Figure 2. This main advantage translates into the following, particular benefits:
- reduction in the footprint of the working chamber 11 inside of which the operations of opening and overturning the tray 1 and transferring the vials 2 are performed, with the resulting reduction in electricity consumption for making the working chamber 11 operate;
- reduction in the number of glove flanges 13 to perform the same type and number of tray 1 handling actions, with resulting gain in terms of reliability;
- reduction in tray 1 handling times, since the number of times wherein the operator passes from a pair of glove flanges 13 to the next is reduced.

## Claims

1. A tray overturning device for a pharmaceutical isolator to overturn a tray containing vials with their respective heads facing the bottom of the tray, the tray overturning device (16) comprising a upright (19) fixable to a floor of a working chamber (11) of the pharmaceutical isolator (10), a frame (21) hinged to the upright (19) to rotate about a first axis (22) orthogonal to the upright (19) between a first position and a second position, two guides (23) mounted on the frame (21) so as to be orthogonal to a plane on which the first axis (22) lies to support the tray (1) along two side portions (9) of the tray (1), and a lid (24) mounted on the frame (21) so as to rotate about a second axis (25) to and from a closed position, wherein the lid (24) is arranged parallel to the two guides (23); in said first position the two guides (23) being disposed so as to receive the tray (1) and the lid (24) in the closed position being disposed above the two guides (23) to cover the tray (1); in said second position the two guides (23) being disposed so as to overturn the tray (1) above the lid (24) in the closed position so that the lid (24) acts as a support surface for the vials (2) falling from the tray (1); the two guides (23) being movable transversally and reciprocally between a receiving position, in which the two guides (23) are apt to receive the tray (1) when the frame (21) is in the first position, and a locking position, in which the two guides (23) clamp the tray (1).

2. The tray overturning device (16) according to claim 1, wherein the two guides (23) in the receiving position are apt to receive the tray (1) by sliding along said two lateral portions (9); the two guides (23) being movable between said locking position and a releasing position by passing through said receiving position; in the releasing position the two guides (23) being transversally spaced apart to an extent that allows removal by lifting of the tray (1) when the frame (21) is in the second position.

3. The tray overturning device (16) according to claim 1 or 2, wherein said second position is rotated by a flat angle relative to said first position.

4. The tray overturning device (16) according to any one of claims 1 to 3, wherein said second axis (25) is parallel to said first axis (22).

5. The tray overturning device (16) according to any one of claims 1 to 4, and comprising a drive system (26) for moving said two guides (23) transversely and reciprocally.

6. The tray overturning device (16) according to claim 5, wherein said drive system (26) comprises a primary shaft (41), which is mounted on the frame (21) to rotate about a third axis (42) parallel to the first axis (22) and comprises two involute screws (43) of opposite direction and a first handwheel (27) operable manually to rotate the primary shaft (41), and two secondary shafts (44), each of which is provided with at least one radial arm (45) to rigidly support a respective one guide of the two guides (23), is mounted on the frame (21) to rotate about a respective fourth axis (46) parallel to the guide and comprises a gear wheel (47) coupled to a respective one of the two involute screws (43).

7. The tray overturning device (16) according to any one of claims 1 to 6, and comprising a first locking system (28) for locking the lid (24) in the closed position.

8. The tray overturning device (16) according to claim 7, wherein said first locking system (28) comprises two rods (50) mounted on the lid (24) to slide axially such that two ends (51) of the two rods (50) engage two respective holes (52) on two opposite side portions (34, 40) of the frame (21), at least one elastic member (53) to keep the ends (51) of the rods (50) engaged in the holes (52), a cam mechanism (54) coupled to the two rods (50), and a second handwheel (29) connected to the cam mechanism (54) and manually operable to rotate against the action of the elastic member (53) so as to disengage the ends (51) of the rods (50) from the holes (52).

9. The tray overturning device (16) according to any one of claims 1 to 8, and comprising a second locking system (30) for selectively locking the frame (21) in the first position and in the second position.

10. The tray overturning device (16) according to claim 9, wherein said second locking system (30) comprises a spring pin (31) mounted on the upright (19) and suitable for engaging a first seat (32) or a second seat (33) in a portion of the frame (21), the engagement of the first seat (32) defining the first position of the frame (21) and the engagement of the second seat (33) defining the second position of the frame (21).

11. A pharmaceutical isolator for handling a tray containing vials with their respective heads facing the bottom of the tray, the pharmaceutical isolator (10) comprising a working chamber (11), which has an inlet opening (14) for inserting the tray (1) and an outlet opening (15) for extracting the vials (2) with their respective heads facing upwards, and a tray overturning device (16), which is arranged in the work chamber (11) between the inlet opening (14) and the outlet opening (15), is according to any one of the claims 1 to 10 and has the upright (19) fixed to the floor of the work chamber (11).

12. The pharmaceutical isolator according to claim 11, wherein the work chamber (11) comprises a pair of connecting guides (17) disposed between the inlet opening (14) and the tray overturning device (16) and a connecting plane (18) disposed between the tray overturning device (16) and the outlet opening (15).

13. The pharmaceutical isolator according to claim 12, wherein the connecting guides (17) are arranged in the working chamber (11) to be aligned with the two guides (23) of the tray overturning device (16) when the frame (21) is in the first position and the two guides (23) of the tray overturning device (16) are in the receiving position, and the connecting plane (18) is arranged in the work chamber (11) to be coplanar with the lid (24) of the tray overturning device (16) when the lid (24) is in the closed position and the frame (21) is in the second position.

## Patentansprüche

1. Tray-Wendevorrichtung für einen pharmazeutischen Isolator zum Wenden eines Trays, der Vials enthält, deren jeweilige Oberseiten der Unterseite des Trays zugewandt sind, wobei die Tray-Wendevorrichtung (16) einen Ständer (19) umfasst, der an einem Boden einer Arbeitskammer (11) des pharmazeutischen Isolators (10) fixierbar ist, einen Rahmen (21), der an dem Pfosten (19) angelenkt ist, um sich um eine erste Achse (22) orthogonal zu dem Ständer (19) zwischen einer ersten Position und einer zweiten Position zu drehen, zwei Führungen (23), die auf dem Rahmen (21) montiert sind, sodass sie orthogonal zu einer Ebene verlaufen, auf der die erste Achse (22) liegt, um den Tray (1) entlang zweier Seitenabschnitte (9) des Trays (1) zu stützen, und einen Deckel (24), der auf dem Rahmen (21) montiert ist, sodass er sich um eine zweite Achse (25) in eine und aus einer geschlossenen Position dreht, wobei der Deckel (24) parallel zu den beiden Führungen (23) angeordnet ist, die beiden Führungen (23) in der ersten Position so angeordnet sind, dass sie den Tray (1) aufnehmen, und der Deckel (24) in der geschlossenen Position oberhalb der beiden Führungen (23) angeordnet ist, um den Tray (1) zu bedecken, die beiden Führungen (23) in der zweiten Position so angeordnet sind, dass sie den Tray (1) oberhalb des Deckels (24) in der geschlossenen Position wenden, sodass der Deckel (24) als Stützoberfläche für die vom Tray (1) fallenden Vials (2) fungiert, wobei die beiden Führungen (23) quer sowie hin- und hergehend zwischen einer Aufnahmeposition, in der die beiden Führungen (23) ausgelegt sind, um den Tray (1) aufzunehmen, wenn sich der Rahmen (21) in der ersten Position befindet, und einer Verriegelungsposition, in der die beiden Führungen (23) den Tray (1) festspannen, bewegbar sind.

2. Tray-Wendevorrichtung (16) nach Anspruch 1, wobei die beiden Führungen (23) in der Aufnahmeposition ausgelegt sind, um den Tray (1) durch Verschieben entlang zweier Seitenabschnitte (9) aufzunehmen, die beiden Führungen (23) zwischen der Verriegelungsposition und einer Freigabeposition bewegbar sind, indem sie die Aufnahmeposition durchlaufen, wobei die beiden Führungen in der Freigabeposition (23) quer in einem Ausmaß beabstandet sind, das das Entfernen des Trays (1) durch Anheben ermöglicht, wenn sich der Rahmen (21) in der zweiten Position befindet.

3. Tray-Wende-Vorrichtung (16) nach Anspruch 1 oder 2, wobei die zweite Position um einen flachen Winkel in Bezug auf die erste Position gedreht ist.

4. Tray-Wende-Vorrichtung (16) nach einem der Ansprüche 1 bis 3, wobei die zweite Achse (25) parallel zu der ersten Achse (22) verläuft.

5. Tray-Wende-Vorrichtung (16) nach einem der Ansprüche 1 bis 4, umfassend ein Antriebssystem (26), um die beiden Führungen (23) quer und hin- und hergehend zu bewegen.

6. Tray-Wendevorrichtung (16) nach Anspruch 5, wobei das Antriebssystem (26) eine Hauptwelle (41) umfasst, die auf dem Rahmen (21) montiert ist, um sich um eine dritte Achse (42) parallel zu der ersten Achse (22) zu drehen, und zwei gegenläufige Schnecken mit Evolventenflanken (43) sowie ein erstes Handrad (27) umfasst, das von Hand betätigt werden kann, um die Hauptwelle (41) zu drehen, sowie zwei Nebenwellen (44), die jeweils mit mindestens einem radialen Arm (45) versehen sind, um eine jeweilige Führung der beiden Führungen (23) starr zu stützen, auf dem Rahmen (21) montiert sind, um sich um eine jeweilige vierte Achse (46) parallel zu der Führung zu drehen, und ein Zahnrad (47) umfassen, das mit einer jeweiligen der beiden Schnecken mit Evolutenflanken (43) gekuppelt ist.

7. Tray-Wendevorrichtung (16) nach einem der Ansprüche 1 bis 6, umfassend ein erstes Verriegelungssystem (28) zum Verriegeln des Deckels (24) in der geschlossenen Position.

8. Tray-Wendevorrichtung (16) nach Anspruch 7, wobei das erste Verriegelungssystem (28) zwei Stangen (50) umfasst, die auf dem Deckel (24) montiert sind, um derart axial zu gleiten, dass zwei Enden (51) der beiden Stangen (50) mit zwei jeweiligen Löchern (52) auf zwei entgegengesetzten Seitenabschnitten (34, 40) des Rahmens (21) in Eingriff gelangen, mindestens ein elastisches Element (53), um die Enden (51) der Stangen (50) im Eingriff in den Löchern (52) zu halten, einen Nockenmechanismus (54), der mit den beiden Stangen (50) gekuppelt ist, und ein zweites Handrad (29), das mit dem Nockenmechanismus (54) verbunden ist und von Hand betätigt werden kann, um sich gegen die Wirkung des elastischen Elements (53) zu drehen, sodass die Enden (51) der Stangen (50) aus den Löchern (52) freigegeben werden.

9. Tray-Wendevorrichtung (16) nach einem der Ansprüche 1 bis 8, umfassend ein zweites Verriegelungssystem (30), um den Rahmen (21) wahlweise in der ersten Position und in der zweiten Position zu verriegeln.

10. Tray-Wendevorrichtung (16) nach Anspruch 9, wobei das zweite Verriegelungssystem (30) einen Federstift (31) umfasst, der auf dem Ständer (19) montiert und geeignet ist, um mit einem ersten Sitz (32) oder einem zweiten Sitz (33) in einem Abschnitt des Rahmens (21) in Eingriff zu gelangen, wobei der Eingriff des ersten Sitzes (32) die erste Position des Rahmens (21) definiert und der Eingriff des zweiten Sitzes (33) die zweite Position des Rahmens (21) definiert.

11. Pharmazeutischer Isolator zum Handhaben eines Trays, das Vials enthält, deren jeweilige Oberseiten der Unterseite des Trays zugewandt sind, wobei der pharmazeutische Isolator (10) eine Arbeitskammer (11) umfasst, die eine Einlassöffnung (14) zum Einfügen des Trays (1) und eine Auslassöffnung (15) zum Herausnehmen der Vials (2), deren jeweilige Oberseiten nach oben zeigen, aufweist, sowie eine Tray-Wendevorrichtung (16), die in der Arbeitskammer (11) zwischen der Einlassöffnung (14) und der Auslassöffnung (15) angeordnet ist, nach einem der Ansprüche 1 bis 10 ausgeführt ist und deren Ständer (19) am Boden der Arbeitskammer (11) fixiert ist.

12. Pharmazeutischer Isolator nach Anspruch 11, wobei die Arbeitskammer (11) ein Paar Verbindungsführungen (17) umfasst, die zwischen der Einlassöffnung (14) und der Tray-Wendevorrichtung (16) angeordnet sind, sowie eine Verbindungsebene (18), die zwischen der Tray-Wendevorrichtung (16) und der Auslassöffnung (15) angeordnet ist.

13. Pharmazeutischer Isolator nach Anspruch 12, wobei die Verbindungsführungen (17) in der Arbeitskammer (11) angeordnet sind, um fluchtend zu den beiden Führungen (23) der Tray-Wendevorrichtung (16) ausgerichtet zu werden, wenn sich der Rahmen (21) in der ersten Position befindet und sich die beiden Führungen (23) der Tray-Wendevorrichtung (16) in der Aufnahmeposition befinden, und die Verbindungsebene (18) in der Arbeitskammer (11) so angeordnet ist, dass sie ebenflächig mit dem Deckel (24) der Tray-Wendevorrichtung (16) ist, wenn sich der Deckel (24) in der geschlossenen Position befindet und sich der Rahmen (21) in der zweiten Position befindet.

## Revendications

1. Dispositif de renversement de plateau pour un isolateur pharmaceutique pour renverser un plateau contenant des flacons avec leurs têtes respectives tournées vers le fond du plateau, le dispositif de renversement de plateau (16) comprenant un montant (19) pouvant être fixé à un plancher d'une chambre de travail (11) de l'isolateur pharmaceutique (10), un cadre (21) articulé au montant (19) pour pivoter autour d'un premier axe (22) orthogonal au montant (19) entre une première position et une seconde position, deux guides (23) montés sur le cadre (21) de manière à être orthogonaux à un plan sur lequel repose le premier axe (22) pour soutenir le plateau (1) le long de deux parties latérales (9) du plateau (1), et un couvercle (24) monté sur le cadre (21) de manière à tourner autour d'un deuxième axe (25) vers et depuis une position fermée, dans lequel le couvercle (24) est disposé parallèlement aux deux guides (23) ; dans ladite première position, les deux guides (23) étant disposés de manière à recevoir le plateau (1) et le couvercle (24) dans la position fermée étant disposé au-dessus des deux guides (23) pour couvrir le plateau (1) ; dans ladite seconde position, les deux guides (23) étant disposés de manière à renverser le plateau (1) au-dessus du couvercle (24) en position fermée, de sorte que le couvercle (24) agit comme une surface de support pour les flacons (2) tombant du plateau (1) ; les deux guides (23) étant mobiles transversalement et réciproquement entre une position de réception, dans laquelle les deux guides (23) sont aptes à recevoir le plateau (1) lorsque le cadre (21) est dans la première position, et une position de verrouillage, dans laquelle les deux guides (23) serrent le plateau (1).

2. Dispositif de renversement de plateau (16) selon la revendication 1, dans lequel les deux guides (23) dans la position de réception sont aptes à recevoir le plateau (1) en coulissant le long desdites deux parties latérales (9) ; les deux guides (23) étant mobiles entre ladite position de verrouillage et une position de libération en passant par ladite position de réception ; dans la position de libération, les deux guides (23) étant espacés transversalement dans une mesure qui permet le retrait par levage du plateau (1) lorsque le cadre (21) est dans la seconde position.

3. Dispositif de renversement de plateau (16) selon la revendication 1 ou 2, dans lequel ladite seconde position est tournée d'un angle plat par rapport à ladite première position.

4. Dispositif de renversement de plateau (16) selon l'une quelconque des revendications 1 à 3, dans lequel ledit deuxième axe (25) est parallèle audit premier axe (22).

5. Dispositif de renversement de plateaux (16) selon l'une quelconque des revendications 1 à 4, et comprenant un système d'entraînement (26) pour déplacer lesdits deux guides (23) transversalement et réciproquement.

6. Dispositif de renversement de plateaux (16) selon la revendication 5, dans lequel ledit système d'entraînement (26) comprend un arbre primaire (41), qui est monté sur le cadre (21) pour tourner autour d'un troisième axe (42) parallèle au premier axe (22) et comprend deux vis à développante (43) de direction opposée et un premier volant (27) pouvant être actionné manuellement pour faire tourner l'arbre primaire (41), et deux arbres secondaires (44), dont chacun est pourvu d'au moins un bras radial (45) pour supporter rigidement un guide respectif des deux guides (23), est monté sur le cadre (21) pour tourner autour d'un quatrième axe respectif (46) parallèle au guide et comprend une roue dentée (47) couplée à l'une respective des deux vis à développante (43).

7. Dispositif de renversement de plateau (16) selon l'une quelconque des revendications 1 à 6, et comprenant un premier système de verrouillage (28) pour verrouiller le couvercle (24) dans la position fermée.

8. Dispositif de renversement de plateau (16) selon la revendication 7, dans lequel ledit premier système de verrouillage (28) comprend deux tiges (50) montées sur le couvercle (24) pour coulisser axialement de sorte que deux extrémités (51) des deux tiges (50) s'engagent dans deux trous respectifs (52) sur deux parties latérales opposées (34, 40) du cadre (21), au moins un élément élastique (53) pour maintenir les extrémités (51) des tiges (50) engagées dans les trous (52), un mécanisme à came (54) couplé aux deux tiges (50), et un second volant (29) relié au mécanisme à came (54) et pouvant être actionné manuellement pour tourner contre l'action de l'élément élastique (53) de manière à désengager les extrémités (51) des tiges (50) par rapport aux trous (52).

9. Dispositif de renversement de plateau (16) selon l'une quelconque des revendications 1 à 8, et comprenant un second système de verrouillage (30) pour verrouiller sélectivement le cadre (21) dans la première position et dans la seconde position.

10. Dispositif de renversement de plateau (16) selon la revendication 9, dans lequel ledit second système de verrouillage (30) comprend une goupille élastique (31) montée sur le montant (19) et apte à engager un premier siège (32) ou un second siège (33) dans une partie du cadre (21), l'engagement du premier siège (32) définissant la première position du cadre (21) et l'engagement du second siège (33) définissant la seconde position du cadre (21)

11. Isolateur pharmaceutique pour la manipulation d'un plateau contenant des flacons avec leurs têtes respectives tournées vers le fond du plateau, l'isolateur pharmaceutique (10) comprenant une chambre de travail (11), qui a une ouverture d'entrée (14) pour l'insertion du plateau (1) et une ouverture de sortie (15) pour l'extraction des flacons (2) avec leurs têtes respectives tournées vers le haut, et un dispositif de renversement de plateau (16), qui est disposé dans la chambre de travail (11) entre l'ouverture d'entrée (14) et l'ouverture de sortie (15), est selon l'une quelconque des revendications 1 à 10 et a le montant (19) fixé au plancher de la chambre de travail (11).

12. Isolateur pharmaceutique selon la revendication 11, dans lequel la chambre de travail (11) comprend une paire de guides de liaison (17) disposés entre l'ouverture d'entrée (14) et le dispositif de renversement de plateau (16) et un plan de liaison (18) disposé entre le dispositif de renversement de plateau (16) et l'ouverture de sortie (15).

13. Isolateur pharmaceutique selon la revendication 12, dans lequel les guides de liaison (17) sont disposés dans la chambre de travail (11) pour être alignés avec les deux guides (23) du dispositif de renversement de plateau (16) lorsque le cadre (21) est dans la première position et les deux guides (23) du dispositif de renversement de plateau (16) sont dans la position de réception, et le plan de liaison (18) est disposé dans la chambre de travail (11) de manière à être coplanaire avec le couvercle (24) du dispositif de renversement de plateau (16) lorsque le couvercle (24) est dans la position fermée et que le cadre (21) est dans la seconde position.
